# EUROPÄISCHE PATENTANMELDUNG

(11) **EP 0 672 454 A1**
(43) Veröffentlichungstag der Anmeldung: **20.09.1995**
(21) Anmeldenummer: 95102134.4
(22) Anmeldetag: 16.02.1995
(51) Int. Cl.: B01J 37/02, B01J 37/04

(54) **Verfahren zum Aufbringen einer Beschichtung auf die Wabenkörper eines Abgaskonverters**

(30) Priorität: 17.03.1994 DE 4409142
(71) Anmelder: Degussa Aktiengesellschaft, D-60311 Frankfurt (DE)
(72) Erfinder: Domesle, Rainer, Dr., D-63755 Alzenau (DE); Engler, Bernd, Dr., White Plains, NY 10605 (US); Lox, Egbert, Dr., D-63457 Hanau (US)

(57) **Zusammenfassung**

Die Erfindung betrifft ein Verfahren zum Aufbringen einer Beschichtung auf die Wabenkörper eines Abgaskonverters, der in einem gemeinsamen Gehäuse oder Hüllrohr zwei solcher Wabenkörper enthält, die hintereinander angeordnet und durch einen Spalt voneinander getrennt sind. Erfindungsgemäß wird die Beschichtungsdispersion zunächst von einer Seite des Abgaskonverters bis in den Spalt zwischen den beiden Wabenkörpern zugeführt. Anschließend wird das überschüssige Beschichtungsmaterial mit einem Luftstoß aus Richtung des unbeschichteten Wabenkörpers ausgetragen. Zur Beschichtung des zweiten Wabenkörpers wird der Abgaskonverter gedreht und nun die Beschichtungsdispersion von der noch unbeschichteten Seite her in analoger Weise aufgebracht. Im Anschluß an die Dispersionsbeschichtung erfolgt dann die Fertigstellung des Katalysators durch Trocknen und gegebenenfalls Calzinieren.

## Beschreibung

Die Erfindung betrifft ein Verfahren zum Aufbringen einer Beschichtung auf die Wabenkörper eines Abgaskonverters, der in einem gemeinsamen Gehäuse oder Hüllrohr zwei solcher Wabenkörper enthält, die hintereinander angeordnet und durch einen Spalt voneinander getrennt sind. Bei der Beschichtung kann es sich um katalytisch aktive Beschichtungen, um Absorber- oder Adsorberbeschichtungen oder um Kombinationen dieser Beschichtungstypen in einem Abgaskonverter handeln, die unter Verwendung einer Beschichtungsdispersion aus feinteiligen Feststoffen und gegebenenfalls gelösten Verbindungen auf den Wabenkörpern abgeschieden wird.

Die überwiegende Mehrzahl von Katalysatoren zur Abgasreinigung z. B. von stationären und instationären Verbrennungsmotoren werden durch Beschichten von inerten monolithischen Trägern mit einer katalytisch aktiven Beschichtung hergestellt. Die Katalysatoren werden nach der Beschichtung in ein Gehäuse eingesetzt, welches eine Eintritts- und eine Austrittsöffnung für die Abgase aufweist. Zusammen mit dem Gehäuse bilden die Katalysatoren den sogenannten Abgaskonverter. Im einfachsten Fall kann das Gehäuse aus einem einzigen Hüllrohr bestehen.

Als monolithische Träger dienen Wabenkörper aus keramischem Material wie Cordierit und Mullit oder aus temperaturbeständigen metallischen Legierungen mit den Hauptbestandteilen Chrom, Aluminium, Eisen beziehungsweise Chrom, Aluminium, Eisen und Nickel. Die Wabenkörper weisen eine Zellstruktur mit Strömungskanälen auf, durch die das Abgas ohne wesentlichen Druckverlust durch den Abgaskonverter strömen kann.

Keramische Wabenkörper werden in der Regel durch kontinuierliche Extrusion keramischer Massen und nachfolgendem Trocknen und Kalzinieren erhalten. Die Zellstruktur (quadratisch, dreieckig usw.), Zellwandstärke und Zelldichte der Keramikwabenkörper sind frei wählbar. Aus Gründen der Herstelltoleranzen (z. B. Durchbiegung) stehen derartige Keramikwabenkörper jedoch nur in begrenzter Länge zur Verfügung.

Metallwabenkörper bestehen üblicherweise aus einem vergleichsweise dünnen, geformten und von einem zum anderen Ende des Wabenkörpers nicht durchgehend unterbrochenen Metallfolienband beschränkter Breite, das in einem meist außen überstehenden Mantelrohr untergebracht und mit diesem fügetechnisch verbunden ist. Der Metallwabenkörper selbst wird aus einem oder mehreren Metallfolienbändern durch Konfektionieren wie Aufwickeln, Falten oder Stapeln, gegebenenfalls mit Verschlingen von zumindestens einem Blechstapel erzeugt. Das Metallfolienband kann aus glatter und/oder gewellter beziehungsweise ähnlich verformter Folie bestehen, die ihrerseits noch Stanzschlitze oder Öffnungen beliebiger Art aufweisen kann, so daß ein zumindest in Abgasflußrichtung gasdurchlässiger Formkörper entsteht. Entsprechende Metallwabenkörper sind z. B. in EP-A 0 220 468, EP-A 0 245 736, DE-A 40 24 942, EP-A 0 484 364 und WO 89/10470 beschrieben.

Da die Wabenkörper und somit die fertigen Katalysatoren nur in beschränkter Länge zur Verfügung stehen, werden häufig zwei Einzelkatalysatoren hintereinander im Abgaskonverter angeordnet. Weitere Gründe für hintereinander geschaltete Katalysatoren sind z. B. die Verwendung von Trägern mit unterschiedlicher Zelldichte zur Druckverlustminimierung oder die Verbesserung der Abgasdurchmischung nach einem Teilumsatz der Schadstoffe im ersten Katalysator. Durch eine erneute Abgasdurchmischung vor dem Eintritt in den zweiten Katalysator können verbesserte Abgasreinigungswerte erzielt werden.

Zur Senkung der Kohlenwasserstoffemissionen während des Kaltstarts können ebenfalls zwei Wabenkörper in einem Abgaskonverter kombiniert werden, von denen der eine mit einer Kohlenwasserstoffe adsorbierenden Beschichtung versehen ist und der zweite mit einer katalytisch aktiven Beschichtung.

Im Falle der keramischen Katalysatoren werden einzelne, meist querschnittsgleiche Wabenkörper mit bestimmtem Abstand voneinander in das Abgaskonvertergehäuse eingesetzt, das beispielsweise anschließend durch Verschweißen seitlich verschlossen wird. Im Falle der metallischen Katalysatoren mit zumindest einem, einseitig über den Wabenkörper hinausragenden Hüllrohr, können die Hüllrohre zweier Wabenkörper zur Ausbildung des Abgaskonverters auch direkt stirnseitig miteinander verschweißt werden. Gemischte Systeme aus Keramik- und Metallkatalysatoren sind ebenfalls bekannt.

Bei den bekannten Abgaskonvertern werden die Katalysatoren durch Beschichten der inerten Wabenkörper mit einer katalytisch aktiven Beschichtung vor dem Einbau in das Konvertergehäuse hergestellt. Dazu werden die Wabenkörper in eine Beschichtungsdispersion aus hochoberflächigen Metalloxiden wie zum Beispiel γ-Aluminiumoxid und Ceroxid mit gegebenenfalls weiteren Zusätzen als Promotoren in Form von Feststoffen oder gelösten Verbindungen getaucht. Nach dem Tauchen werden die Strömungskanäle der Wabenkörper von überschüssiger Beschichtungsdispersion durch Freiblasen mit Druckluft befreit, getrocknet und kalziniert.

Die katalytisch aktiven Komponenten, zumeist Edelmetalle der Platingruppe und/oder Promotoren, können schon vor dem Beschichten der Wabenkörper der Beschichtungsdispersion zugegeben oder erst nach dem Kalzinieren der Beschichtung durch Impägnieren mit wäßrigen Lösungen von löslichen Verbindungen dieser Komponenten in die Beschichtung eingebracht werden.

Alternativ zum Tauchen können die Wabenkörper auch durch Einpumpen, Aufsaugen oder Übergießen mit der Beschichtungsdispersion beschichtet werden.

Aus Gründen der Fertigungsvereinfachung und Kosteneinsparung ist es insbesondere im Falle von Metallwabenkatalysatoren und den zunehmend zum Einsatz kommenden Heizkatalysatoren mit nachgeschalteten Katalysatoren wünschenswert, die beiden Wabenkörper eines aus zwei Wabenkörpern bestehenden Abgaskonverters erst nach dem Einbau in das Konvertergehäuse zu beschichten. Dies ist jedoch durch einfache Übertragung des Beschichtungsverfahrens für einzelne Wabenkörper auf den schon fertig zusammengebauten Abgaskonverter nur unbefriedigend möglich, da die beim Freiblasen zwischen den beiden Wabenkörpern sich ausbildende turbulente Luftströmung die Beschichtungsdispersion von den inneren Stirnflächen der beiden Wabenkörper nur unzureichend entfernen kann und somit Kanalverengungen und sogar Kanalverstopfungen nicht ausgeschlossen werden können.

Es ist daher Aufgabe der vorliegenden Erfindung, ein Beschichtungsverfahren für zwei in einen Abgaskonverter eingebaute Wabenkörper anzugeben, welches es gestattet, die Wabenkörper in einer ähnlichen Qualität zu beschichten wie es durch eine separate Beschichtung der Wabenkörper vor dem Einbau in das Konvertergehäuse möglich wäre.

Diese Aufgabe wird gelöst durch ein Verfahren zum Aufbringen einer Beschichtung auf die Wabenkörper eines Abgaskonverters, der in einem gemeinsamen Gehäuse oder Hüllrohr einen ersten und einen zweiten Wabenkörper enthält, die hintereinander angeordnet und durch einen Spalt voneinander getrennt sind, wobei der Abgaskonverter eine Eintritts- und eine Austrittsöffnung für die zu konvertierenden Abgase aufweist. Das Verfahren ist dadurch gekennzeichnet, daß der Abgaskonverter zum Beschichten des ersten Wabenkörpers durch die Eintrittsöffnung bis zum Spalt zwischen den beiden Wabenkörpern mit Beschichtungsdispersion gefüllt und wieder entleert wird, daß die überschüssige Dispersion anschließend mittels mindestens eines von der Austrittsöffnung und/oder Eintrittsöffnung her eindringenden Gasstromes entfernt, daß zum Beschichten des zweiten Wabenkörpers dieser Beschichtungsvorgang unter Vertauschung von Ein- und Austrittsöffnung sinngemäß wiederholt wird und daß die Beschichtung abschließend auf den Wabenkörpern durch Trocknen fixiert und gegebenenfalls calziniert wird.

Das erfindungsgemäße Beschichtungsverfahren eignet sich zur Beschichtung von zwei keramischen und/oder metallischen Wabenkörpern beliebiger Länge, Zellstruktur und Zelldichte sowie beliebiger Querschnitte, die sich in einem gemeinsamen Gehäuse oder Hüllrohr befinden. Die beiden Wabenkörper können unterschiedliche Zellstrukturen, Zell-dichten und Querschnitte aufweisen und von gleicher oder unterschiedlicher Länge sein.

Es ist selbstverständlich, daß das Verfahren auch für monolithische Trägerkörper mit einer offenzelligen Porenstruktur, wie z. B. Schaumkeramiken, einsetzbar ist. Der Begriff Wabenkörper wird daher in dieser Beschreibung und in den Ansprüchen stellvertretend für alle in der Abgaskatalyse üblichen monolithischen Trägerkörper verwendet.

Keramische Wabenkörper werden vor dem Einbau in das Konvertergehäuse zunächst z. B. mit einer flexiblen, temperaturbeständigen Fasermatte umhüllt, um eine Schädigung beim Einbau selbst oder durch Vibrationen im techischen Einsatz zu vermeiden. Auf gleiche Weise können auch metallische Wabenkörper in das Konvertergehäuse eingebaut werden. Auch Kombinationen von einem metallischen und einem keramischen Wabenkörper in einem gemeinsamen Gehäuse wie z. B. ein metallischer Heizkatalysatorträger mit einem keramischen Wabenkörper können erfindungsgemäß beschichtet werden.

Insbesondere bietet sich das erfindungsgemäße Beschichtungsverfahren für Metallwabenkörper an, die in dem gemeinsamen Hüllrohr z. B. durch Löten fixiert sind. Die Metallwabenkörper können generell wie in der Einleitung beschrieben aus Metallfolienbändern aufgebaut oder auch durch Extrusion von Metallpulvern mit nachfolgender Sinterung hergestellt sein. Gegebenenfalls können zur Erhöhung der mechanischen Stabilität, z. B. wenn einer der beiden Wabenkörper besonders kurz ausgeführt ist, stabförmige Verbindungen zwischen den beiden Wabenkörpern angebracht sein.

Die metallischen oder keramischen Wabenkörper sind üblicherweise zylinder- beziehungsweise scheibenförmige Gebilde beliebigen Querschnittes. Jedoch können auch einoder beidseitig kegelförmige oder gewölbte Wabenkörper sowie zu Hohlkegeln ausgeschobene Zylinder und Zylinder mit Wölbungen an den Stirnflächen verwendet werden.

Wabenkörper aller Ausführungen können untereinander kombiniert gleichsinnig oder ungleichsinnig in das Abgaskonvertergehäuse eingebaut werden, um z. B. eine bestimmte, meist gleichmäßige Gasverteilung in den Katalysatoren sicherzustellen. Sowohl die üblichen zylinderförmigen Wabenkörper als auch die Sonderformen und Kombinationen davon können mit dem erfindungsgemäßen Verfahren nach ihrem Einbau in das Konvertergehäuse beschichtet werden.

Das Beschichtungsverfahren kann auf verschiedenartige Konvertergehäuse und Hüllrohre angewendet werden. Üblicherweise besteht ein Abgaskonverter aus einem zylindrischen Rohr, welches z. B. zur besseren Fixierung der Wabenkörper oder zur Verbesserung der akustischen Eigenschaften mit Sicken und Einzügen versehen sein kann. Jedoch sind auch Ausführungen mit mindestens einem angeformten oder angeschweißten Konus nach dem Verfahren beschichtbar, wobei das Gehäuse oder Hüllrohr aus zwei Halbschalen aufgebaut sein kann. Gegebenenfalls können ein oder beide Wabenkörper in den Konen untergebracht sein. Ebenso kann der Konverter im Spalt zwischen beiden Wabenkörpern eine Vorrichtung zur Zu- oder Abfuhr eines Gases oder einer Flüssigkeit aufweisen oder es können Vorkehrungen hierzu getroffen sein.

Als Beschichtungsdispersion können alle bekannten Beschichtungsdispersionen eingesetzt werden, die durch Mischen feinteiliger Stoffe mit Flüssigkeiten oder durch zusätzliches Naßmahlen hergestellt werden. Beschichtungsdispersionen für die Abgasreinigung enthalten üblicherweise feinteilige meist hochoberflächige Trägermaterialien wie γ-Aluminiumoxid, Titanoxid, Siliziumdioxid und Zeolithe, Promotoren wie Ceroxid, Zirkonoxid und Molybdänsilizid sowie andere Hilfsstoffe oder Vorläuferverbindungen wie Böhmit, Ceracetat oder Cerhydroxid sowie gegebenenfalls katalytisch aktive Komponenten. Katalytisch aktive Komponenten können Edelmetalle der Platingruppe und deren Verbindungen und/oder Unedelmetalle z. B. in Form ihrer Oxide, Mischoxide oder definierten Verbindungen wie Perowskite sein.

Als flüssige Phase der Beschichtungsdispersion finden in der Regel Wasser oder wäßrige Salzlösungen Verwendung, jedoch sind auch alle anderen Flüssigkeiten wie organische Lösungsmittel und Mischungen davon wie beispielsweise ein Alkohol/Wasser-Gemisch möglich.

Erfindungsgemäß werden die beiden Wabenkörper des Abgaskonverters nacheinander in zwei Schritten beschichtet. Hierzu wird der Abgaskonverter zunächst durch eine seiner beiden Öffnungen, z. B. der Eintrittsöffnung, hindurch bis in den Spalt zwischen den beiden Wabenkörpern mit Beschichtungsdispersion geflutet. Das Fluten des Abgaskonverters kann durch entsprechendes Eintauchen des gesamten Konverters in die Beschichtungsdispersion oder durch Hochsaugen oder Einpumpen der Beschichtungsdispersion in den Abgaskonverter erfolgen. Danach wird der Abgaskonverter wieder entteert, was z. B. durch Auslaufen oder Auspumpen der Beschichtungsdispersionen erfolgen kann. Anschließend wird noch in den Strömungskanälen befindliches überschüssiges Beschichtungsmaterial mittels mindestens eines von der Austritts- und/oder Eintrittsöffnung her eindringenden Gasstromes entfernt. Eine solche Gasströmung kann durch Anlegen von Über- oder Unterdruck erzeugt werden. Üblicherweise wird dieser Vorgang durch Ausblasen mit Druckluft oder durch Durchsaugen von Luft verwirklicht.

Der Einfachheit halber können das Entleeren des Abgaskonverters und das Entfernen der überschüssigen Beschichtungsdispersion in einem Arbeitsgang gleichzeitig vorgenommen werden.

Bevorzugt wird die überschüssige Beschichtungsdispersion durch einen Gasstrom entfernt, der von der entfernteren zu der dem gerade frisch beschichteten Wabenkörper benachbarten Öffnung des Abgaskonverters gerichtet ist. Diese bevorzugte Gasströmungsrichtung stellt sicher, daß die Beschichtungsdispersion nicht in unkontrollierter Weise auf den noch nicht beschichteten Wabenkörper gelangt, antrocknet und den nachfolgenden Beschichtungsvorgang erschwert. Gleichzeitig wird eine mögliche Beschichtungsanhäufung am frisch beschichteten Wabenkörper im Bereich des Spaltes zwischen beiden Wabenkörpern, wo eine Kontrolle der Beschichtungsgüte kaum möglich ist, vermieden.

Falls auf der außenliegenden Stirnfläche des gerade frisch beschichteten Wabenkörpers ähnliche Materialanhäufungen auftreten sollten, sind diese einfach zu erkennen und können durch einen kurzen Saugstoß oder vorsichtiges Blasen unter Umkehr der Gasströmungsrichtung beseitigt werden.

Zur Beschichtung des zweiten Wabenkörpers wird der Abgaskonverter gedreht und nun die Beschichtungsdispersion von der noch unbeschichteten Seite her aufgebracht. Überschüssige Beschichtungsdispersion wird auf gleiche Weise wie beim vorangegangenen Beschichtungsschritt entfernt.

Die auf den Wabenkörpern verbleibende Menge an Beschichtungsdispersion beziehungsweise die Beschichtungsdicke können durch Einstellen der Viskosität der Beschichtungsdispersion sowie durch Wahl der Füllzeit, der Entleerungszeit und die Dauer und Stärke der Gasströmung für die Entfernung der überschüssigen Dispersion beeinflußt werden. Diese Maßnahmen zur Steuerung der Beschichtungsdicke werden z. B. in der DE-PS 40 40 150 C2 für die Beschichtung einzelner nicht eingebauter Wabenkörper beschrieben und können sinngemäß auf das erfindungsgemäße Verfahren übertragen werden.

Durch das erfindungsgemäß nacheinander erfolgende Beschichten der beiden Wabenkörper können Nachteile vermieden werden, die sich bei gleichzeitiger Beschichtung beider Wabenkörper des Abgaskonverters ergeben würden. Bei gleichzeitiger Beschichtung könnte die überschüssige Beschichtungsdispersion nur unzureichend von den beiden inneren Stirnflächen der Wabenkörper entfernt werden. Dies gilt insbesondere für Beschichtungsdispersionen, die einen hohen Feststoffgehalt und daher eine hohe Viskosität aufweisen. Solche hochkonzentrierten Beschichtungsdispersionen werden benötigt, wenn die erforderliche Schichtdicke in einem einzigen Beschichtungsschritt aufgebracht werden soll. Die unzureichende Dispersionsentfernung wäre in diesem Fall mit einer Kanalverengung oder teilweisen Kanalverstopfung an oder in der Nähe zumindest einer der beiden inneren Stirnflächen der Wabenkörper verbunden. Dies würde zu einem erhöhten Abgasgegendruck des Abgaskonverters und damit zu einem unerwünschten Leistungsverlust des Motors und zum Mehrverbrauch an Treibstoff führen. Diese Nachteile werden durch das erfindungsgemäße Beschichtungsverfahren vermieden.

Im Anschluß an die Dispersionsbeschichtung erfolgt ein Trocknungs- und gegebenenfalls Calziniervorgang z. B. in einem Wasserstoff enthaltenden Gasstrom.

Meist enthält die Beschichtungsdispersion bereits alle Komponenten der Katalysatorformulierung als solche oder in Form ihrer Vorläuferverbindungen, so daß spätestens nach dem abschließenden Calziniervorgang die Katalysatorherstellung abgeschlossen ist.

Bei einer besonderen Ausgestaltung des erfindungsgemäßen Verfahrens wird anschließend die Beschichtung eines oder beider Wabenkörper mit gleichen oder unterschiedlichen Lösungen von weiteren katalytisch aktiven Stoffen wie Edelmetallsalzen und/oder Promotoren imprägniert.

Diese Imprägnierung kann sowohl durch Übergießen, Besprühen, Eintauchen oder gegebenenfalls durch ein dem Beschichtungsverfahren gleichartiges Imprägnierverfahren erfolgen.

Gegebenenfalls kann es vorteilhaft sein, die Dispersion auf dem zuerst beschichteten Wabenkörper vor dem Beschichten des zweiten Wabenkörpers durch Trocknen zumindest teilweise zu fixieren. Bei zum Nachlaufen neigenden Dispersionen werden damit ungünstige Auswirkungen auf die Beschichtungsverteilung beim Entfernen überschüssigen Beschichtungsmaterials des zweiten Wabenkörpers vermieden. Als geeignete Trocknungsmaßnahme kann der zum Entfernen der überschüssigen Beschichtungsdispersion eingesetzte Gasstrom selbst erwärmt werden oder nachträglich ein zusätzlicher, erwärmter Gasstrom durch den Abgaskonverter geleitet werden. Ebenso besteht die Möglichkeit, den gesamten Abgaskonverter vor oder nach dem Beschichten zu erwärmen, um damit eine beschleunigte Antrocknung der Beschichtung zu erreichen.

Aufgrund der schrittweisen Beschichtung beider Wabenkörper gemäß der Erfindung können sie mit unterschiedlichen Beschichtungsdispersionen versehen werden. Auf diese Weise sind verschieden wirkende Katalysatoren in einem einzigen Abgaskonverter herstellbar. Ebenso kann auch einer der beiden Wabenkörper mit einer Absorberbeschichtung z. B. zur Bindung von Katalysatorgiften und/oder einer Adsorberbeschichtung z. B. für Kohlenwasserstoffe beschichtet werden, während der zweite Wabenkörper mit einer konventionellen Katalsatorbeschichtung versehen wird. Ebenso können beide Wabenkörper mit einer Absorber- bzw. Adsorberbeschichtung beschichtet werden.

Darüber hinaus erlaubt das erfindungsgemäße Verfahren bei entsprechenden katalytischen Erfordernissen unterschiedliche Beschichtungsmengen auf beide Wabenkörper aufzubringen. Dies kann bei Verwendung gleicher Zusammensetzung der Dispersion z. B. durch Ändern der rheologischen Eigenschaften der Dispersion zwischen dem ersten und zweiten Beschichtungsvorgang geschehen. Bei verschieden zusammengesetzten Beschichtungsdispersionen ergeben sich wegen unterschiedlicher Rheologie in der Regel von vornherein unterschiedliche Mengen an katalytischer Beschichtung auf beiden Wabenkörpern.

Soll einer der beiden Wabenkörper des Abgaskonverters nur als Strömungsverteiler, Strömungsbrecher oder als Heizkatalysatorträger ausgebildet sein, so kann eine Beschichtung dieses Wabenkörpers unterbleiben. Bei stark abrasivem Abgas sowie extremer thermischer Belastung kann es vorteilhaft sein, den anströnseitigen Wabenkörper des Angaskonverters nicht zu beschichten.

Beim erfindungsgemäßen Beschichtungsverfahren ist es wichtig, die Füllhöhe beim Fluten des Abgaskonverters mit Beschichtungsdispersion genau einzustellen. Hierzu können z. B. optische Füllstandskontrollmethoden eingesetzt werden. Alternativ dazu kann die Füllhöhe auch durch entsprechende volumetrische Bemessungen der Beschichtungsmenge, z. B. über die Anzahl der Kolbenhüben einer Pumpe eingestellt werden.

Die erfindungsgemäß beschichteten Abgaskonverter können für die Abgasreinigung insbesondere von stationären oder instationären Verbrennungsmaschinen verwendet werden.

## Patentansprüche

1. Verfahren zum Aufbringen einer Beschichtung aus feinteiligen Feststoffen unter Verwendung einer Beschichtungsdispersion auf die Wabenkörper eines Abgaskonverters, der in einem gemeinsamen Gehäuse oder Hüllrohr einen ersten und einen zweiten Wabenkörper enthält, die hintereinander angeordnet und durch einen Spalt voneinander getrennt sind, wobei der Abgaskonverter eine Eintritts- und eine Austrittsöffnung für die zu konvertierenden Abgase aufweist.
**dadurch gekennzeichnet**,
daß der Abgaskonverter zum Beschichten des ersten Wabenkörpers durch die Eintrittsöffnung bis zum Spalt zwischen den beiden Wabenkörpern mit Beschichtungsdispersion gefüllt und wieder entleert wird, daß die überschüssige Dispersion anschließend mittels mindestens eines von der Austrittsöffnung und/oder Eintrittsöffnung her eindringenden Gasstromes entfernt, daß zum Beschichten des zweiten Wabenkörpers dieser Beschichtungsvorgang unter Vertauschung von Ein- und Austrittsöffnung sinngemäß wiederholt und daß die Beschichtung abschließend auf den Wabenkörpern durch Trocknen fixiert und gegebenenfalls calziniert wird.

2. Verfahren nach Anspruch 1,
**dadurch gekennzeichnet**,
daß das Entleeren des Abgaskonverters und das Entfernen der überschüssigen Beschichtungsdispersion in einem Arbeitsgang gleichzeitig erfolgen.

3. Verfahren nach den Ansprüchen 1 oder 2,
**dadurch gekennzeichnet**,
daß die Beschichtung auf dem ersten Wabenkörper vor dem Beschichten des zweiten Wabenkörpers durch zumindestens teilweises Trocknen fixiert wird, indem der zum Entfernen der überschüssigen Beschichtungsdispersion eingesetzte Gasstrom selbst erwärmt wird oder nachträglich ein zusätzlicher, erwärmter Gasstrom durch den Abgaskonverter geleitet oder der Konverter vor oder nach der Beschichtung erwärmt wird.

4. Verfahren nach den Ansprüchen 1 bis 3,
**dadurch gekennzeichnet**,
daß die beiden Wabenkörper mit verschiedenen Beschichtungsdispersionen beschichtet werden.

5. Verfahren nach den Ansprüchen 1 bis 4,
**dadurch gekennzeichnet**,
daß beide Wabenkörper mit unterschiedlichen Mengen an Beschichtungsdispersion beschichtet werden.

6. Verfahren nach Anspruch 5,
**dadurch gekennzeichnet**,
daß nur ein Wabenkörper beschichtet wird.

7. Verfahren nach einem der Ansprüche 1 bis 6,
**dadurch gekennzeichnet**,
daß nach dem Fixieren der Beschichtung durch Trocknen und gegebenenfalls Calzinieren zumindest eine katalytisch aktive Komponente und/oder mindestens ein Promotor durch Imprägnieren in die Beschichtung mindestens eines Wabenkörpers eingebracht werden.

8. Verfahren nach den Ansprüchen 1 bis 5,
**dadurch gekennzeichnet**,
daß die Beschichtungen beider Wabenkörper nach dem Trocknen und gegebenenfalls Kalzinieren mit unterschiedlichen katalytisch aktiven Komponenten und/oder Promotoren imprägniert werden.

9. Verfahren nach den Ansprüchen 7 oder 8,
**dadurch gekennzeichnet**,
daß das Imprägnieren der Beschichtungen in gleicher Weise wie das Beschichten der Wabenkörper vorgenommen wird.

10. Verwendung der nach dem Verfahren der Ansprüche 1 bis 9 hergestellten Abgaskonverter für die Abgasreinigung insbesondere von stationären oder instationären Verbrennungsmaschinen.
